# EUROPEAN PATENT APPLICATION

(11) **EP 4 823 231 A1**
(43) Date of publication of application: **14.10.2026**
(21) Application number: 23960787.2
(22) Date of filing: 06.12.2023
(51) Int. Cl.: H04W 76/30, H04W 12/069

(54) **NETWORK NODE AND COMMUNICATION METHOD**

(71) Applicant: NTT DOCOMO, INC., Tokyo 100-6150 (JP); NTT, Inc., Tokyo 100-8116 (JP)
(72) Inventor: YAMAUCHI, Kenta, Tokyo 100-6150 (JP); KUROIWA, Fumito, Tokyo 100-6150 (JP); MAEDA, Hiroaki, Musashino-shi, Tokyo 180-8585 (JP); HIGO, Naoki, Musashino-shi, Tokyo 180-8585 (JP); MATSUMOTO, Arifumi, Musashino-shi, Tokyo 180-8585 (JP)
(74) Representative: Hoffmann Eitle
(86) International application number: PCT/JP2023/043699
(87) International publication number: WO 2025/120774

(57) **Abstract**

A network node includes: a reception unit configured to receive, from a terminal that has connected to a network based on authentication using a credential containing personal data, a first message requesting release of the connection; and a transmission unit configured to transmit, to a session management node, a second message requesting release of the connection, the second message including the credential or an identifier of the terminal, wherein the credential or the identifier is acquired based on the first message.

## Description

### Technical Field

The present invention relates to a network node and a communication method in a communication system.

### Background Art

In 3GPP (registered trademark) (3rd Generation Partnership Project), a radio communication scheme called 5G or NR (New Radio) (hereinafter, this radio communication scheme is referred to as "5G" or "NR") has been introduced in order to achieve a further increase in system capacity, a further increase in data transmission speed, a further reduction in latency in a radio section, and the like. In 5G, various radio technologies have been introduced in order to satisfy the requirement of achieving a throughput of 10 Gbps or more while reducing the latency in the radio section to 1 ms or less. Furthermore, studies are also being conducted on 6G, which is a future communication system.

In recent years, as a new way of thinking about identity management, the concept of self-sovereign identity (SSI), in which a user manages the user's own identifiers and identity and controls destinations to which the identifiers and identity are provided without depending on a centralized identity provider (ID provider) or the like, and technologies for implementing the concept (for example, W3C Decentralized Identifiers (DIDs) and W3C Verifiable Credentials (VCs)) have been studied.

In the world of SSI, for example, by presenting, to a service provider side by a user, an attribute/qualification credential proving attribute information, qualification information, and the like, the service provider side can determine whether to provide a service to the user.

### Citation List

### Non-Patent Literature

[Non-Patent Literature 1] 3GPP TS 23.502 V18.3.0 (2023-09)
[Non-Patent Literature 2] W3C Decentralized Identifiers (DIDs) v1.0, https://www.w3.org/TR/did-core/
[Non-Patent Literature 3] W3C Verifiable Credentials Data Model v1.1, https://www.w3.org/TR/vc-data-model/

### Summary of Invention

### Technical Problem

In a conventional NW (network) of a telecommunications carrier, authentication for connecting a terminal (which may also be called a UE) to the NW is performed based on a SUPI included in a SIM mounted in the terminal.

However, in the conventional NW, there is no mechanism for realizing NW connection of a terminal based on authentication that is based on an attribute/qualification credential. Further, there is also no mechanism for releasing the connection after a connection has been established based on authentication that is based on an attribute/qualification credential.

The present invention has been made in view of the above points, and an object thereof is to provide a technique that enables a terminal that has connected to a NW based on authentication that is based on an attribute/qualification credential to release the connection.

### Solution to Problem

According to the disclosed technology, there is provided a network node including:
a reception unit configured to receive, from a terminal that has connected to a network based on authentication using a credential containing personal data, a first message requesting release of the connection; and
a transmission unit configured to transmit, to a session management node, a second message requesting release of the connection, the second message including the credential or an identifier of the terminal, wherein the credential or the identifier is acquired based on the first message.

### Advantageous Effects of Invention

According to the disclosed technology, there is provided a technique that enables a terminal that has connected to a NW based on authentication using an attribute/qualification credential to release the connection.

### Brief Description of Drawings

[FIG. 1] FIG. 1 is a diagram for explaining an example of a communication system.
[FIG. 2] FIG. 2 is a diagram for explaining an example of a communication system in a roaming environment.
[FIG. 3] FIG. 3 is a diagram illustrating an example of a system configuration common to the first and second embodiments.
[FIG. 4] FIG. 4 is a diagram illustrating Processing Sequence Example 1 in the first embodiment.
[FIG. 5] FIG. 5 is a diagram for explaining authentication processing of S106 in Processing Sequence Example 1 in the first embodiment.
[FIG. 6] FIG. 6 is a diagram illustrating Processing Sequence Example 2 in the first embodiment.
[FIG. 7] FIG. 7 is a diagram for explaining authentication processing of S107 in Processing Sequence Example 2 in the first embodiment.
[FIG. 8] FIG. 8 is a diagram illustrating a processing sequence example of Pattern 1 in the second embodiment.
[FIG. 9] FIG. 9 is a diagram illustrating a processing sequence example of Pattern 2 in the second embodiment.
[FIG. 10] FIG. 10 is a diagram illustrating an example of a functional configuration of a network node 100 according to an embodiment of the present invention.
[FIG. 11] FIG. 11 is a diagram illustrating an example of a functional configuration of a terminal 20 according to an embodiment of the present invention.
[FIG. 12] FIG. 12 is a diagram illustrating an example of a hardware configuration of the terminal 20 and the network node 100 according to an embodiment of the present invention.
[FIG. 13] FIG. 13 is a diagram illustrating an example of a configuration of a vehicle 2001 according to an embodiment of the present invention. Description of Embodiments

Embodiments of the present invention will now be described below with reference to the drawings. Note that the embodiments described below are merely examples, and embodiments to which the present invention is applied are not limited to the embodiments described below.

In the operation of the radio communication system according to the embodiments of the present invention, existing techniques are used as appropriate. However, such existing techniques are, for example, existing LTE or existing NR, but are not limited thereto.

First, in the present embodiment, an example of a configuration of a 5G core network, which is an example of a network in which authentication based on an attribute/qualification credential is performed, will be described, and thereafter a configuration and operation according to the present embodiment will be described.

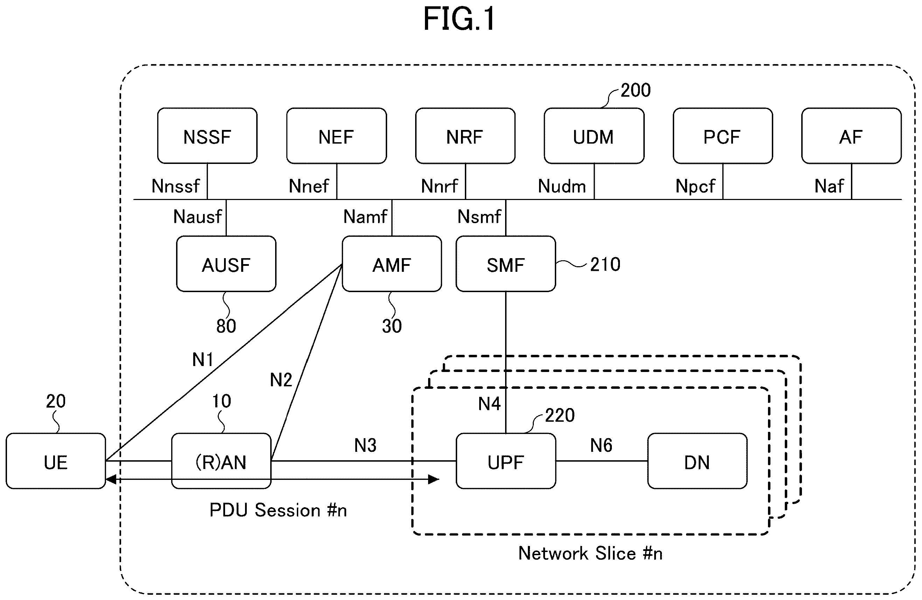

FIG. 1 is a diagram for explaining an example of a communication system corresponding to a core network. As illustrated in FIG. 1, the present communication system includes a UE, which is a terminal 20, and a plurality of network nodes. Hereinafter, one network node is assumed to correspond to each function; however, one network node may implement a plurality of functions, or a plurality of network nodes may implement one function. In addition, "connection" described below may be a logical connection or a physical connection.

A (R)AN ((Radio) Access Network) is a network node having a radio access function, may include a base station 10, and is connected to the UE 20, an AMF (Access and Mobility Management Function) 30, and a UPF (User Plane Function) 220. The AMF 30 is a network node having functions such as termination of a RAN interface, termination of NAS (Non-Access Stratum), registration management, connection management, reachability management, and mobility management. The UPF 220 is a network node having functions such as a PDU (Protocol Data Unit) session point toward the outside that interconnects with a DN (Data Network), packet routing and forwarding, and QoS (Quality of Service) handling of the user plane. The UPF 220 and the DN constitute a network slice.

The AMF 30 is connected to the UE 20, the (R)AN 10, an SMF (Session Management Function) 210, an NSSF (Network Slice Selection Function), an NEF (Network Exposure Function), an NRF (Network Repository Function), a UDM (Unified Data Management), an AUSF (Authentication Server Function), a PCF (Policy Control Function) 200, and an AF (Application Function). The AMF 30, the SMF 210, the NSSF, the NEF, the NRF, the UDM 40, the AUSF 80, the PCF 200, and the AF are network nodes interconnected through service-based interfaces Namf, Nsmf, Nnssf, Nnef, Nnrf, Nudm, Nausf, Npcf, and Naf, respectively.

The SMF 210 is a network node having functions such as session management, assignment and management of an IP (Internet Protocol) address of the UE 20, a DHCP (Dynamic Host Configuration Protocol) function, an ARP (Address Resolution Protocol) proxy, and a roaming function. The SMF 210 may also be called a session management node. The NEF is a network node 30 having a function of notifying capabilities and events to other NFs (Network Functions). The NSSF is a network node having functions such as selection of a network slice to which the UE 20 connects, determination of allowed NSSAI (Network Slice Selection Assistance Information), determination of configured NSSAI, and determination of an AMF set to which the UE 20 connects. The PCF 200 is a network node having a function of performing policy control of the network. The AF is a network node having a function of controlling an application server. The NRF is a network node having a function of discovering NF instances that provide services. The UDM 40 is a network node that manages subscriber data and authentication data. The UDM 40 is connected to a UDR (User Data Repository) that stores the data. The UDM 40 may also be called a data management node.

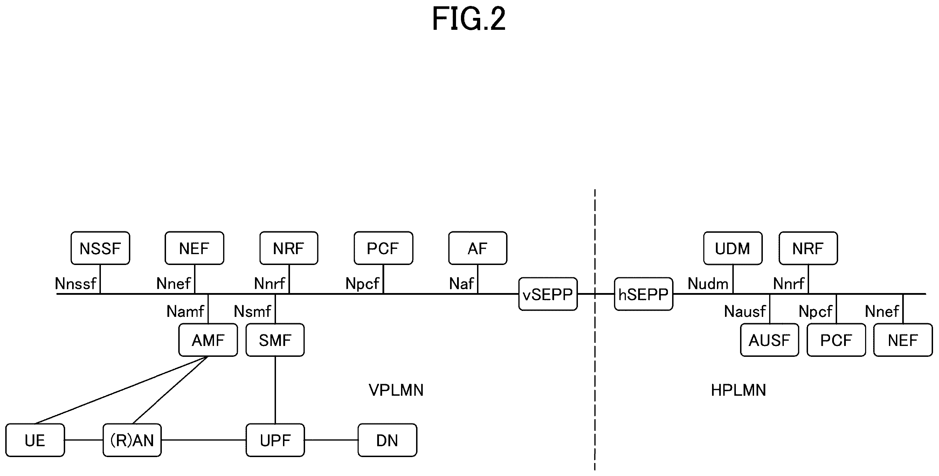

FIG. 2 is a diagram for explaining an example of a communication system in a roaming environment. As illustrated in FIG. 2, the network includes a UE, which is the terminal 20, and a plurality of network nodes.

A SEPP is a non-transparent proxy that filters control-plane messages between PLMNs (Public Land Mobile Networks). The vSEPP shown in FIG. 2 is a SEPP in a visited network, and the hSEPP is a SEPP in a home network.

As illustrated in FIG. 2, the UE 20 is in a roaming environment in which it is connected to the (R)AN and the AMF 30 in a VPLMN (Visited PLMN). The VPLMN and an HPLMN (Home PLMN) are connected via the vSEPP and the hSEPP. The UE 20 can communicate with, for example, a UDM in the HPLMN via the AMF 30 of the VPLMN.

### (Regarding SSI)

As described above, in recent years, as a new way of thinking about identity management, the concept of self-sovereign identity (SSI), in which a user manages the user's own identifiers and identity and controls destinations to which the identifiers and identity are provided without depending on a centralized identity provider (ID provider) or the like, and technologies for implementing the concept (for example, W3C Decentralized Identifiers (DIDs) and W3C Verifiable Credentials (VCs)) have been studied.

In the world of SSI, there are three parties: a Holder, an Issuer, and a Verifier. The Holder is, for example, a user or the like who manages/holds the user's own digital identity. The Issuer issues, to a user or the like, an attribute/qualification credential (for example, a VC) after proving attribute information (name, age, address, and the like), qualification information (for example, that the user is an employee of a certain company or a member of a certain service), and the like. By requesting and receiving an attribute/qualification credential (VC) required for service provision from the Holder, the Verifier verifies an attribute, qualification, and the like of the Holder and determines whether to provide a service.

An example of an attribute/qualification credential is a VC (Verifiable Credential). A VC is a signed document storing personal data. The above attribute information and qualification information are examples of personal data. An attribute/qualification credential may also be called a credential containing personal data. Further, the credential containing personal data does not necessarily need to include information capable of uniquely identifying an individual, and, for example, an anonymously issued membership card also falls under a credential containing personal data.

Further, for example, a DID (Decentralized Identifier) is used as an identifier of the Issuer and the Holder. The DID is registered in a distributed ledger and is easily accessible, but is difficult to falsify.

### (Regarding the Problem)

In a conventional NW (network) of a telecommunications carrier, authentication for connecting a UE to a NW is performed based on a SUPI included in a SIM mounted in a UE.

By performing NW connection of the UE based on authentication using an attribute/qualification credential such as a DID and a VC, the following, for example, becomes possible.

- Addressing management needs for self-sovereign identity
- Simplification of identity verification of a user (for example, KYC) by using an attribute/qualification credential of the user certified by a third party other than a telecommunications carrier
- Realization of a new NW connection service for specific service subscribers
- Use of the NW by diverse UEs without depending on a SIM

However, in a conventional 3GPP NW, there is no mechanism for establishing a NW connection of the UE based on authentication using an attribute/qualification credential.

Further, in a conventional 3GPP NW, there is no mechanism for a UE that has connected to the NW based on authentication using an attribute/qualification credential to release the connection.

Below, as techniques for solving the above problems, a first embodiment and a second embodiment will be described. First, an overview of the first embodiment, an overview of the second embodiment, and an example of a system configuration common to the first embodiment and the second embodiment will be described, and thereafter the first embodiment and the second embodiment will be described in detail, respectively.

### (Overview of the First Embodiment)

First, an overview of the first embodiment will be described. In the first embodiment, a NW Registration authentication function using an attribute/qualification credential such as a VC (an authentication function based on an attribute/qualification credential) is added in a 3GPP NW. In the first embodiment, as this authentication function, two patterns are assumed: a form in which the authentication function is defined as a new NF (Network Function), and a form in which an existing function such as an AUSF is extended.

The "3GPP NW" may also be called a core network defined by 3GPP (registered trademark). In the present embodiment, the "3GPP NW" is taken up and described as the "network," but the technology according to the present invention is applicable to a network that is not limited to a "3GPP NW."

In the first embodiment, a specific example of authentication logic using an attribute/qualification credential will be described, but the authentication logic is merely an example and is not limited to the authentication logic.

In the first embodiment, for an existing 3GPP NW, a NW-Registration-related interface (C-Plane) using an attribute/qualification credential is added between the UE and the 3GPP NW. Specifically, this is as described in (1) and (2) below.

(1) An interface is added for transmitting an attribute/qualification credential from the UE to the 3GPP NW by C-Plane communication. There are two patterns: a form in which the interface is defined as a new interface, and a form in which information to be transmitted in a Registration Request is added.
(2) An interface is added for notifying the UE of a result from an authentication function that performs authentication processing using an attribute/qualification credential. There are two patterns: a form in which the interface is defined as a new interface, and a form in which an existing interface is extended.

Further, in the first embodiment, logic from permission of NW Registration after successful authentication using an attribute/qualification credential to D-Plane communication is added.

Further, in the first embodiment, by utilizing information of the attribute/qualification credential, subscriber information can be registered in the UDM so that charging and the like can be carried out.

### (Overview of the Second Embodiment)

The second embodiment is an embodiment relating to release of a connection after the UE 20 has been connected to the NW based on authentication using an attribute/qualification credential by the technique according to the first embodiment. However, the connection is not limited to connection according to the first embodiment, and after connection has been established by a technique other than that of the first embodiment, release of the connection in the second embodiment may be performed.

In the second embodiment, in each node involved in the existing Deregistration procedure (the AMF 30, the SMF 210, and the UDM 40), at least one of a user identifier and an attribute/qualification credential, instead of SUPI, is managed in association with management information of the node.

Among messages/APIs involved in the existing Deregistration procedure (Nsmf_PDUSession_ReleaseSMContext Request, Nsmf_PDUSession_ReleaseSMContext Request, Nudm_SDM_Unsubscribe service operation, Nudm_UECM_DeregistrationNotification, and the like), with respect to a message/API for which inclusion of a SUPI is specified in the existing specification, at least one of a user identifier and an attribute/qualification credential may be included instead of the SUPI.

The second embodiment includes Pattern 1 in which release of the NW connection is triggered from the UE 20 side, and Pattern 2 in which release of the NW connection for a specific UE 20 is triggered from the NW side.

In Pattern 1, in which release of the NW connection is triggered from the UE 20 side, there is a form in which an existing Deregistration Request is used as is and a form in which the Deregistration Request is extended. Of these, in the form in which the Deregistration Request is used as is, a function for performing the following processing is added to the existing AMF 30.

As processing after successful authentication using an attribute/qualification credential, the AMF 30 generates a 5G-GUTI for identifying the UE 20 that has been successfully authenticated, and manages, in association with the 5G-GUTI, at least one of a user identifier (for example, a W3C DID) and an attribute/qualification credential (for example, a W3C VC or VP) used for authentication of the UE 20. Further, the AMF 30 transmits a Registration Accept message to the UE 20 including the 5G-GUTI.

As processing upon reception of a Deregistration Request, the AMF 30 acquires, from its own management information, the user identifier or the attribute/qualification credential corresponding to the 5G-GUTI.

### (System Configuration Example)

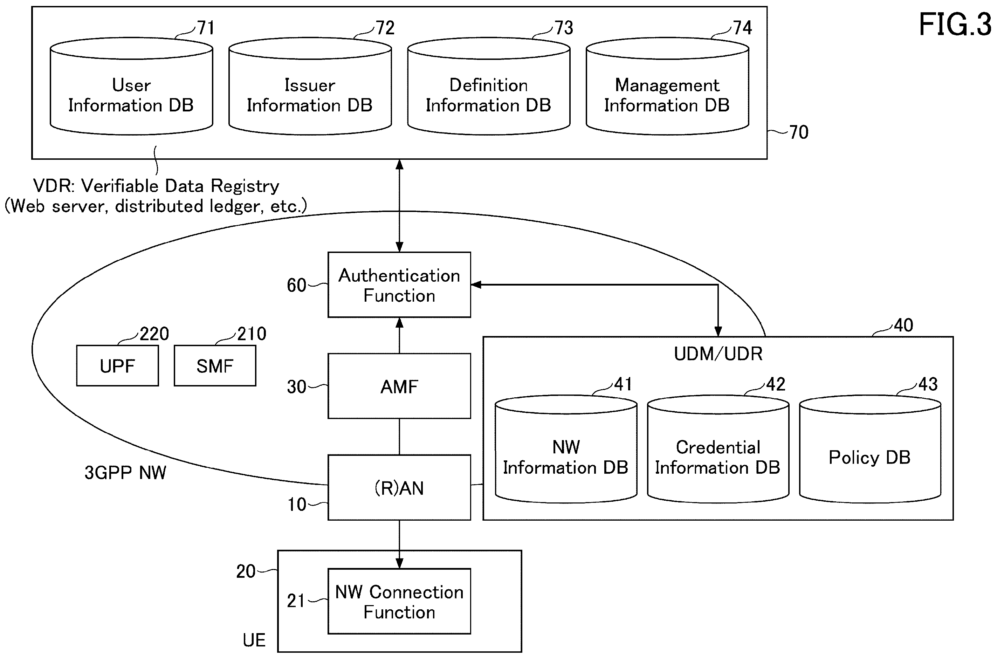

FIG. 3 illustrates an example of a system configuration common to the first embodiment and the second embodiment. As illustrated in FIG. 3, a communication system according to the present embodiment includes a UE 20, a (R)AN 10, an authentication function 60 that performs authentication based on an attribute/qualification credential, a UDM/UDR (40), a VDR (Verifiable Data Registry) 70, an SMF 210, and a UPF 220. Since the UDM 40 is used together with a UDR, the description is given as UDM/UDR. The "authentication function 60" illustrated here may be a newly defined apparatus (network node), or may be obtained by extending a function of an existing apparatus (for example, an AUSF). In the description of the first embodiment, the "authentication function 60" is described as a newly defined apparatus (network node).

The UE 20 includes a NW connection function 21. The NW connection function 21 executes operations in respective sequences described later. The UE 20 may also be called a terminal 20.

As illustrated in FIG. 3, the UDM/UDR (40) includes a NW information DB (database) 41, a credential information DB 42, and a policy DB 43.

The NW information DB 41 stores a NW identifier, a NW public key, and a NW private key. The credential information DB 42 stores information on credentials available for NW connection. The policy DB 43 stores an authentication method selection policy. The NW described above is a 3GPP NW, and, for example, when referring to an "NW identifier" (the same applies to an NW public key and an NW private key), this may be an identifier common to a plurality of network nodes in the 3GPP NW, or may be an identifier used for a specific network node in the 3GPP NW.

In the present embodiment, the VDR 70 is disposed outside the 3GPP NW. However, the present invention is not limited to a configuration in which the VDR 70 is disposed outside the 3GPP NW, and the VDR 70 may be provided in the 3GPP NW.

The VDR 70 is an apparatus that can be implemented by a Web server, a distributed ledger, or the like. The VDR 70 includes a user information DB 71, an issuer information DB 72, a definition information DB 73, and a management information DB 74.

The user information DB 71 stores a user identifier and a public key of the user. The issuer information DB 72 stores an identifier of an issuer of an attribute/qualification credential used for NW connection authentication, and a public key of the issuer. The definition information DB 73 stores a schema and definition information of the attribute/qualification credential. The management information DB 74 stores management information indicating validity/revocation of the attribute/qualification credential.

Note that the term "user" and the term "UE" (or "terminal") may be used synonymously. Unless a contradiction arises in context, the term "user" described below may be replaced with "UE" or "terminal."

### (First Embodiment: Overview)

First, the first embodiment will be described. Below, an example using the authentication function 60, which is a newly defined network node, as the "authentication function" will be described as Processing Sequence Example 1, and an example using the AUSF 80 as the "authentication function" will be described as Processing Sequence Example 2.

### (First Embodiment: Processing Sequence Example 1)

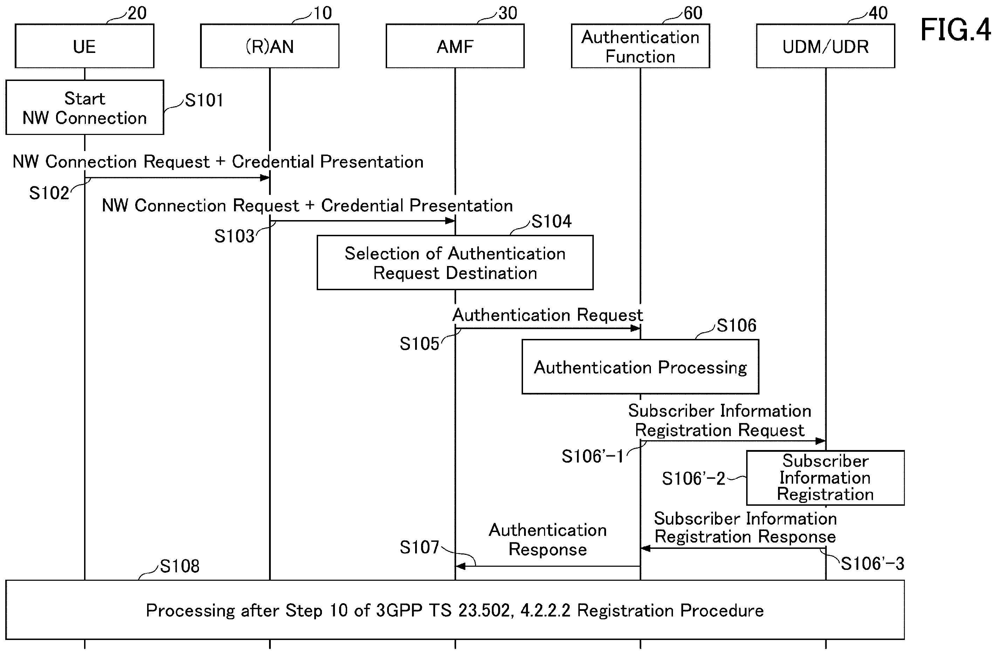

With reference to FIG. 4, Processing Sequence Example 1 in the first embodiment will be described. Processing Sequence Example 1 is an example in a case where a new NF and a new IF are used. Preconditions for the processing are as follows.

A user holds a public/private key pair corresponding to the user's own identifier, and stores the user's own identifier in association with the public key in the VDR 70 that is located at a place accessible by the 3GPP NW.

The user holds an attribute/qualification credential (available for NW connection) issued by an arbitrary entity (such as a company or another user).

The credential issuer holds a public/private key pair corresponding to the issuer's own identifier, and stores the issuer's own identifier in association with the public key in the VDR 70 that is located at a place accessible by the 3GPP NW.

The credential issuer stores, in the VDR 70 that is located at a place accessible by the 3GPP NW, a format (schema or definition) of the credential issued by the issuer and information for enabling validity verification of the credential. The sequence will be described below.

In S101 (Step 101) of FIG. 4, NW connection processing using an attribute/qualification credential is started, triggered by an operation by a user on a NW connection application, turning ON the power of the UE 20, or the like.

In S102, the UE 20 transmits, to the (R)AN 10 of the 3GPP NW, a NW connection request message that requests NW connection using an attribute/qualification credential and that includes a user identifier (for example, a DID) and a user attribute/qualification credential (for example, a VC). A signature (for example, a VP: Verifiable Presentation) generated by the UE 20 with a private key corresponding to the user identifier is attached to the NW connection request message. The "NW connection request message" may also be called a "connection request message." An example of the "connection request message" includes a Registration Request message described later.

The NW connection request message includes, in addition to information used for authentication, the same type of information as information included in a Registration Request message that is a message at the time of requesting NW connection authentication using a SUPI/SUCI.

In S103, the (R)AN 10 forwards the NW connection request message received from the UE 20 to the AMF 30.

In S104, when the AMF 30 receives a NW connection request message requesting NW connection using an attribute/qualification credential, the AMF 30 selects the authentication function 60 as an authentication request destination. In S105, the AMF 30 transmits, to the authentication function 60, an authentication request message including the attribute/qualification credential included in the NW connection request message.

In S106, the authentication function 60 verifies the received attribute/qualification credential by executing authentication processing using the attribute/qualification credential. The processing here corresponds to Step 9 of the Registration Procedure in 3GPP TS 23.502 4.2.2.2. S106'-1 to S106'-3 will be described later.

In S107, the authentication function 60 transmits, to the AMF 30, an authentication response including an authentication result (success/failure).

Thereafter, in S108 and subsequent steps, connection processing (which may also be called registration processing) is executed. Specifically, NW Registration processing is completed by executing processing from Step 10 onward, which is processing after the authentication processing of Step 9, in the Registration Procedure of 3GPP TS 23.502 4.2.2.2 (Figure 4.2.2.2.2-1: Registration procedure).

The processing of the UE 20 from Step 10 onward includes, for example, reception of Registration Accept and transmission of Registration Complete.

After successful authentication in S106, the optional processing of S106'-1 to S106'-3 below may be executed for charging and the like.

In S106'-1, the authentication function 60 transmits a subscriber information registration request to the UDM/UDR (40). The subscriber information registration request includes information such as the received user identifier, and the user's name and address included in the received attribute/qualification credential. The UDM/UDR (40) registers such information as subscriber information of the user, and returns a subscriber information registration response in S106'-3.

In the above optional form, it is assumed that the message transmitted in S102 includes, in addition to the attribute/qualification credential used for NW connection, another attribute/qualification credential in which information necessary for charging and the like is described. Note that when the term "attribute/qualification credential" is used, it may be interpreted that the "attribute/qualification credential" includes, in addition to an attribute/qualification credential used for NW connection, another attribute/qualification credential in which information necessary for charging and the like is described.

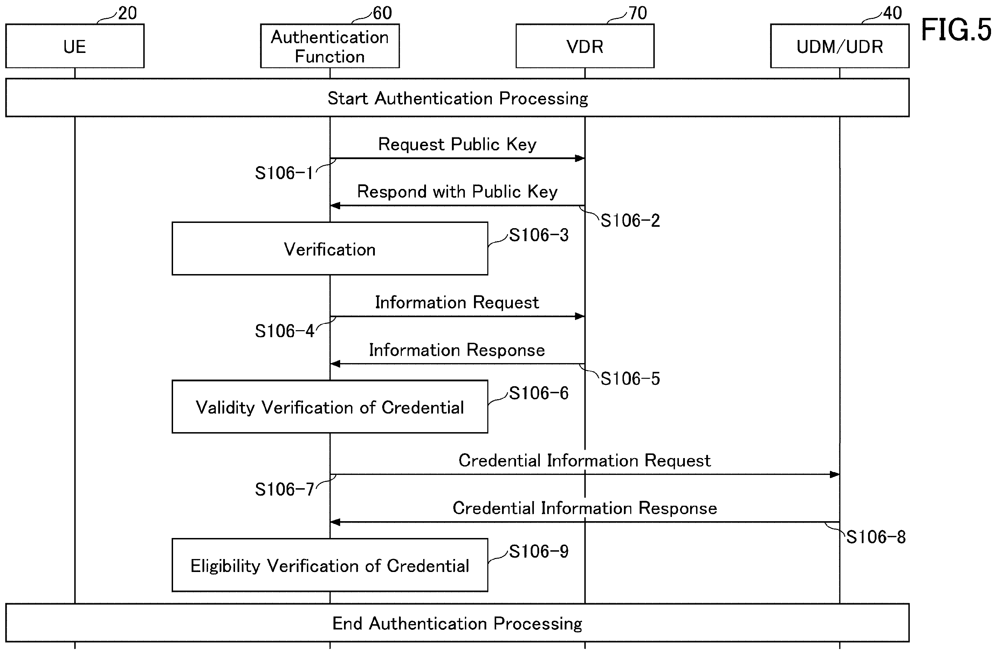

Next, with reference to FIG. 5, details of the authentication processing in S106 will be described. Here, as an example of authentication/verification processing logic, verification of an attribute/qualification credential in W3C DID/VC/VP format is assumed. Note that authentication processing using an attribute/qualification credential is processing for authenticating a user (or the terminal 20) using the attribute/qualification credential.

When the authentication processing using the attribute/qualification credential is started, in S106-1, the authentication function 60 requests, from the VDR 70, a public key corresponding to an identifier of a credential issuer (Issuer) and a public key corresponding to a user identifier. In S106-2, the VDR 70 responds with these public keys to the authentication function 60.

In S106-3, the authentication function 60 verifies the validity of each of the credential issuer's signature and the user's signature, and verifies that there has been no message tampering.

Communication between the authentication function 60 inside the 3GPP NW and the VDR 70 outside the 3GPP NW may be performed via a node (for example, an NEF or an SCEF) that mediates communication between the authentication function 60 inside the 3GPP NW and the VDR 70 outside the 3GPP NW.

More specifically, regarding S106-1 to S106-3, in S106-1 and S106-2, the authentication function 60 acquires (resolves), from the VDR 70, a DID Document (public key) corresponding to DID0 (identifier of the credential issuer) and a DID Document (public key) corresponding to DID1 (identifier of the user), by using any DID Method with DID0 (the identifier of the credential issuer) and DID1 (the identifier of the user) included in the received VP/VC as inputs. In S106-3, the authentication function 60 verifies that the Holder signature of the VP and the Issuer signature of the VC are each signatures made with a private key associated with the corresponding public key (that is, the validity of the signatures and that there has been no message tampering).

In S106-4, the authentication function 60 requests, from the VDR 70, information regarding the format of the credential and the status thereof (revocation status and the like). In S106-5, the VDR 70 responds with the format of the credential and the status information. In S106-6, the authentication function 60 performs validity verification of the credential.

More specifically regarding S106-4 to S106-6, the authentication function 60 acquires, from the VDR 70, a VC schema, definition information, and the like, and verifies that the syntax and the like of the VC are correct. Further, the authentication function 60 acquires, from the VDR 70, validity information/revocation information of the VC, and verifies that the received VC is valid.

In S106-7, the authentication function 60 requests credential information available for NW connection from the UDM/UDR (40), and in S106-8, the UDM/UDR (40) responds with the credential information. In S106-9, the authentication function 60 performs eligibility verification of the credential. More specifically, the authentication function 60 verifies that the VC satisfies conditions for a VC available for NW connection (for example, that the VC is a My Number VC and includes necessary information such as a name and an address). Note that the My Number VC is assumed to be information corresponding to the current My Number converted into a VC format.

When the authentication function 60 determines that all of the above verification results are OK, the authentication function 60 determines that authentication is successful.

### (First Embodiment: Processing Sequence Example 2)

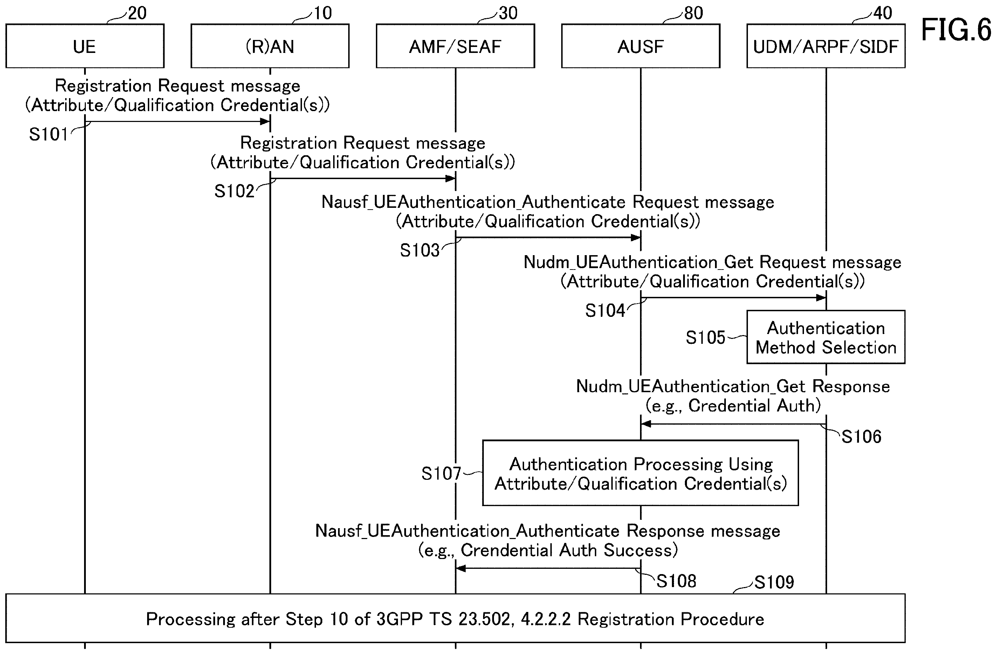

Next, with reference to FIG. 6, Processing Sequence Example 2 in the first embodiment will be described. Processing Sequence Example 2 is an example in a case where an existing NF and an existing IF are extended. In Processing Sequence Example 2, the AUSF 80 includes a function of performing authentication based on an attribute/qualification credential. By this function, authentication processing and the like in S107 described later are performed.

In the UDM 40, an authentication method selection function for selecting an authentication method based on an attribute/qualification credential at the time of selecting an authentication method (S105), and the following information used in the attribute/qualification-credential method are held.

- A NW identifier, and a public key and a private key associated with the identifier
- Information on a credential available for NW connection (type of credential, data format, information that should be included in the credential, and the like)

The sequence will be described with reference to FIG. 6.

In S101, the UE 20 includes an attribute/qualification credential in a Registration Request message, and transmits the Registration Request message including the attribute/qualification credential to the (R)AN 10. In S102, the (R)AN 10 transmits the Registration Request message including the attribute/qualification credential to the AMF/SEAF (30).

In S103, the AMF/SEAF (30) includes the attribute/qualification credential in a Nausf_UEAuthentication_Authenticate Request message, and transmits the Nausf_UEAuthentication_Authenticate Request message including the attribute/qualification credential as an authentication request to the AUSF 80.

In S104, the AUSF 80 includes the attribute/qualification credential in a Nudm_UEAuthentication_Get Request message, and transmits the Nudm_UEAuthentication_Get Request message including the attribute/qualification credential as an authentication request to the UDM/ARPF/SIDF (40).

In S105, the UDM/ARPF/SIDF (40) performs Authentication Method Selection. Specifically, when the received message includes no SUPI or SUCI and includes an attribute/qualification credential, the UDM/ARPF/SIDF (40) selects, as the authentication method, authentication based on the attribute/qualification credential. Further, when the received message includes both a SUPI or SUCI and an attribute/qualification credential, the UDM/ARPF/SIDF (40) selects an authentication method based on a pre-registered authentication method selection policy or a user request.

In S106, the UDM/ARPF/SIDF (40) includes, in a Nudm_UEAuthentication_Get Response message, a character string (for example, Credential Auth) indicating that the attribute/qualification credential authentication method has been selected, and transmits the Nudm_UEAuthentication_Get Response message including the character string to the AUSF 80.

In S107, the AUSF 80 executes authentication processing using the attribute/qualification credential.

In S108, the AUSF 80 includes, in a Nausf_UEAuthentication_Authenticate Response message, a character string (for example, Credential Auth Success) indicating that authentication using the attribute/qualification credential has succeeded, and transmits the Nausf_UEAuthentication_Authenticate Response message including the character string to the AMF/SEAF (30).

Thereafter, in S109, processing from Step 10 onward in the Registration Procedure of 3GPP TS 23.502 4.2.2.2 is executed, and the NW Registration processing is completed. In the NW Registration processing, APIs based on the SUPI/SUCI and subscriber information registration processing based on the SUPI/SUCI are extended so as to be executable using a user identifier (such as a DID) included in the attribute/qualification credential.

Note that, similarly to the Registration Request message, an attribute/qualification credential is also added to messages for Mobility Registration Update/Periodic Registration Update.

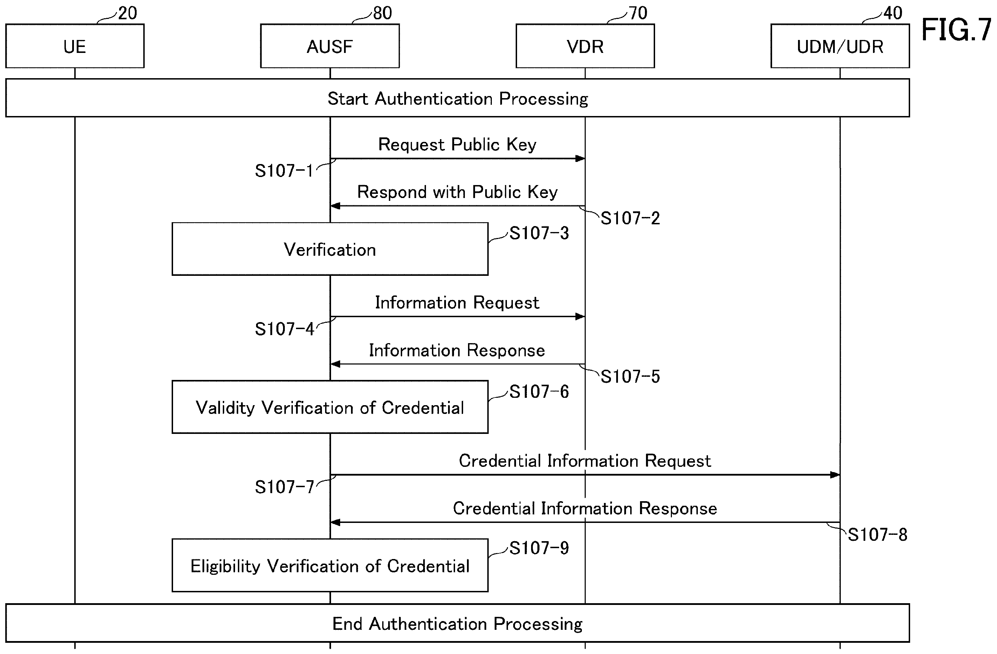

With reference to FIG. 7, details of the authentication processing of S107 will be described. Here, similarly to Processing Sequence Example 1, verification of an attribute/qualification credential in W3C DID/VC/VP format is assumed as an example of verification processing logic. In the following sequence, all communication between the AUSF 80 and the VDR 70 or the UDM 40 is performed by a new C-Plane message.

When the authentication processing using the attribute/qualification credential is started, in S107-1, the AUSF 80 requests, from the VDR 70, a public key corresponding to an identifier of a credential issuer (Issuer) and a public key corresponding to a user identifier. In S107-2, the VDR 70 responds with these public keys to the AUSF 80.

In S107-3, the AUSF 80 verifies the validity of each of the credential issuer's signature and the user's signature, and verifies that there has been no message tampering.

Communication between the AUSF 80 inside the 3GPP NW and the VDR 70 outside the 3GPP NW may also be performed via a node (for example, an NEF or an SCEF) that mediates the communication.

More specifically, regarding S107-1 to S107-3, in S107-1 and S107-2, the AUSF 80 acquires (resolves), from the VDR 70, a DID Document (public key) corresponding to DID0 (identifier of the credential issuer) and a DID Document (public key) corresponding to DID1 (identifier of the user), by using any DID Method with DID0 (the identifier of the credential issuer) and DID1 (the identifier of the user) included in the received VP/VC as inputs. In S107-3, the AUSF 80 verifies that the Holder signature of the VP and the Issuer signature of the VC are signatures made with private keys associated with the corresponding public keys (that is, the validity of the signatures and that there has been no message tampering).

In S107-4, the AUSF 80 requests, from the VDR 70, information regarding the format of the credential and the status thereof (revocation status and the like). In S107-5, the VDR 70 responds with the format of the credential and status information. In S107-6, the AUSF 80 performs validity verification of the credential.

More specifically regarding S107-4 to S107-6, the AUSF 80 acquires, from the VDR 70, a VC schema, definition information, and the like, and verifies that the syntax and the like of the VC are correct. Further, the AUSF 80 acquires, from the VDR 70, validity information/revocation information of the VC, and verifies that the received VC is valid.

In S107-7, the AUSF 80 requests credential information available for NW connection from the UDM/UDR (40), and in S107-8, the UDM/UDR (40) responds with the credential information. In S107-9, the AUSF 80 performs eligibility verification of the credential. More specifically, the AUSF 80 verifies that the VC satisfies conditions for a VC available for NW connection (for example, that the VC is a My Number VC and includes necessary information such as a name and an address).

When the AUSF 80 determines that all of the above verification results are OK, the AUSF 80 determines that authentication is successful.

Note that S107-7 to S107-8 may be omitted by transmitting the credential information acquired in S107-7 to S107-8 while including the credential information in the message of S106 in FIG. 6.

### (Effects of the First Embodiment)

According to the technique of the first embodiment, the terminal 20 can connect to the NW based on authentication using an attribute/qualification credential.

### (Second Embodiment)

In the second embodiment, a mechanism for release of the connection after connection to the NW will be described. As described above, as release methods, there are Pattern 1 and Pattern 2 below.

Pattern 1: UE-initiated Deregistration
Pattern 2: Network-initiated Deregistration

With respect to "UE-initiated Deregistration" of Pattern 1, there are Pattern 1-1 and Pattern 1-2 below.

Pattern 1-1: Use the existing Deregistration Request as it is. That is, notify a UE for which release of the NW connection is to be performed by a 5G-GUTI.

Pattern 1-2: In the Deregistration Request, include and transmit a user identifier (for example, a DID) or an attribute/qualification credential (for example, a VC or VP) instead of a 5G-GUTI.

Each pattern of the second embodiment will be described below.

### (Second Embodiment: Pattern 1-1)

In Pattern 1-1, the existing Deregistration Request is used as is. For that purpose, the following extensions are made to the existing technology (and the technology described in the first embodiment).

As processing after successful authentication using an attribute/qualification credential, the AMF 30 generates a 5G-GUTI for identifying the UE 20 that has been successfully authenticated, and manages, in association with the 5G-GUTI, at least one of a user identifier (for example, a W3C DID) and an attribute/qualification credential (for example, a W3C VC or VP) used for authentication of the UE 20.

Further, the AMF 30 transmits a Registration Accept message to the UE 20 including the 5G-GUTI.

When the 5G-GUTI is notified in the Deregistration Request, the AMF 30 refers to its management information, acquires at least one of the user identifier corresponding to the 5G-GUTI and the attribute/qualification credential, and transmits, to the SMF 210, an Nsmf_PDUSession_ReleaseSMContext Request including, instead of the SUPI, at least one of the user identifier and the attribute/qualification credential.

The SMF 210 manages management information in association with at least one of the user identifier and the attribute/qualification credential, and, when receiving the above message, acquires information using, as a key, at least one of the notified user identifier and the attribute/qualification credential, and executes processing.

The Nudm_SDM_Unsubscribe service operation message and the Nudm_UECM_Deregistration service operation message transmitted from the SMF 210 to the UDM 40 each include, instead of the SUPI, at least one of the user identifier and the attribute/qualification credential.

The UDM 40 manages management information in association with at least one of the user identifier and the attribute/qualification credential, and, when receiving the above service operation message, acquires information using, as a key, at least one of the notified user identifier and the attribute/qualification credential, and executes processing.

The phrase "at least one of the user identifier and the attribute/qualification credential" means only a user identifier, only an attribute/qualification credential, or both a user identifier and an attribute/qualification credential. Further, "user identifier or attribute/qualification credential" has the same meaning as "at least one of the user identifier and the attribute/qualification credential." Hereinafter, for convenience of description, "user identifier or attribute/qualification credential" may be used.

As to which of the user identifier and the attribute/qualification credential (or both) is used to manage information of the user/UE, this may be unified for the entire 3GPP NW, or information of the user/UE may be managed using either piece of information.

When both the SUPI and "at least one of the user identifier and the attribute/qualification credential" are included in a message exchanged between nodes, it may be possible to select which information-based processing is to be prioritized, based on a setting of a user or an operator, or the like.

### (Second Embodiment: Processing Sequence of Pattern 1-1)

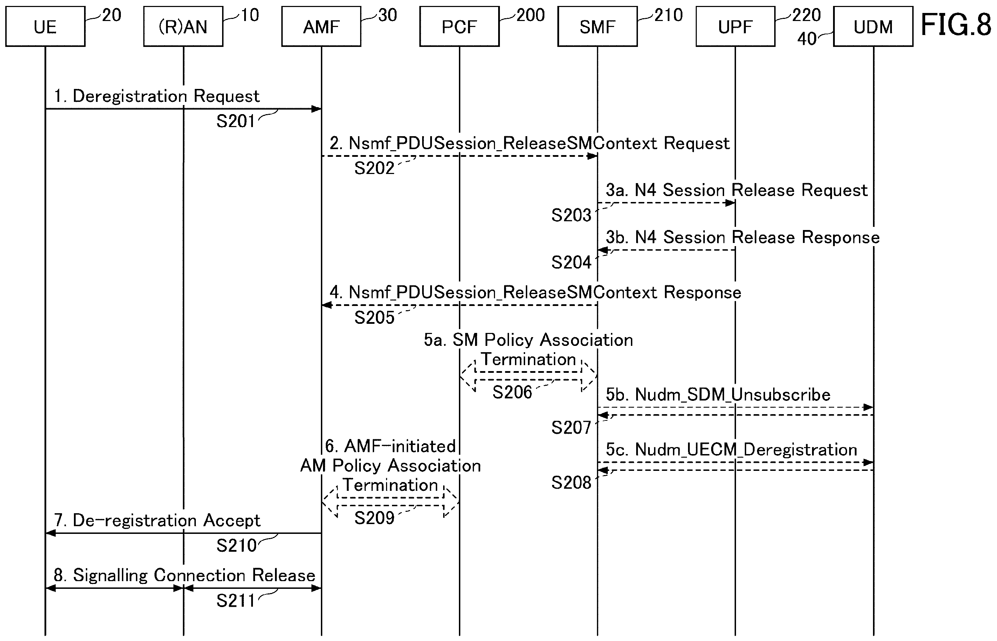

The processing sequence of Pattern 1-1 will be described with reference to FIG. 8. As described above, as a precondition for the processing, in each network node such as the AMF 30, the SMF 210, and the UDM 40, at least one of the user identifier and the attribute/qualification credential is managed in association with existing management information of the network node. Further, as processing after successful authentication using an attribute/qualification credential, in the AMF 30, a 5G-GUTI for identifying the UE 20 that has been successfully authenticated is generated, and at least one of the user identifier and the attribute/qualification credential used for authentication of the UE 20 is managed in association with the 5G-GUTI. Further, it is assumed here that the Registration Accept message from the AMF 30 to the UE 20 has already been transmitted including the 5G-GUTI.

In Pattern 1-1, since the existing sequence relating to the Deregistration Request is used as is, FIG. 8 is basically the same as Figure 4.2.2.3.2-1: UE-initiated Deregistration described in the existing specification (3GPP TS 23.502).

In S201, the UE 20 transmits, to the AMF 30, a Deregistration Request (request message for release of the connection) including "5G-GUTI, Deregistration type (for example, Switch off), and Access Type."

Upon receiving the Deregistration Request, the AMF 30 acquires, from its own storage device or the like, a "user identifier or attribute/qualification credential" corresponding to the 5G-GUTI and information necessary for subsequent processing (such as an SM Context ID).

In S202, the AMF 30 transmits, to the SMF 210, an Nsmf_PDUSession_ReleaseSMContext Request, which is a message for releasing a PDU session on a target access belonging to the UE 20. At this time, the AMF 30 transmits, in the message, the "user identifier or attribute/qualification credential" corresponding to the 5G-GUTI instead of the SUPI.

Upon receiving the Nsmf_PDUSession_ReleaseSMContext Request, the SMF 210 acquires, from its own storage device or the like, information necessary for subsequent processing (for example, a N4 Session ID) corresponding to the received "user identifier or attribute/qualification credential."

In S203, the SMF 210 transmits a N4 Session Release Request to the UPF 220, and in S204, the SMF 210 receives an N4 Session Release Response from the UPF 220.

In S205, the SMF 210 transmits an Nsmf_PDUSession_ReleaseSMContext Response to the AMF 30. In S206, an SM Policy Association Termination procedure is executed between the PCF 200 and the SMF 210.

When the connection to be released is the last PDU session being processed for the UE 20 associated with the DNN and the S-NSSAI, in S207, the SMF 210 unsubscribes from Session Management Subscription data changes notification by the UDM 40 using a Nudm_SDM_Unsubscribe service operation.

In S208, the SMF 210 invokes a Nudm_UECM_Deregistration service operation. As a result, the UDM 40 deletes the SMF ID, the SMF address, and the association stored between the associated DNN and the PDU session ID.

In S207 and S208 described above, the SMF 210 transmits, to the UDM 40, each service operation message including, instead of the SUPI, the user identifier or the attribute/qualification credential. The UDM 40 acquires information necessary for subsequent processing corresponding to the received "user identifier or attribute/qualification credential." Thereafter, processing in the UDM 40 is the same as in the existing technology.

In S209, the AMF 30 executes an AMF-initiated AM Policy Association Termination procedure.

In S210, the AMF 30 transmits Deregistration Accept (acknowledgment message for release of the connection) to the UE 20. In S211, the signaling connection is released.

### (Second Embodiment: Pattern 1-2)

Next, Pattern 1-2 will be described. As described above, Pattern 1-2 is a pattern in which a user identifier or an attribute/qualification credential is included and transmitted in the Deregistration Request instead of a 5G-GUTI.

Also in Pattern 1-2, since the sequence itself is the same as the existing sequence, the processing sequence of Pattern 1-2 will be described with reference to the same FIG. 8 as in Pattern 1-1. As described above, as a precondition for the processing, in each network node such as the AMF 30, the SMF 210, and the UDM 40, at least one of the user identifier and the attribute/qualification credential is managed in association with existing management information of the network node.

In S201, the UE 20 transmits, to the AMF 30, a Deregistration Request including, in addition to "Deregistration type (for example, Switch off) and Access Type," a user identifier or an attribute/qualification credential instead of a 5G-GUTI. Note that the Deregistration Request may also include a 5G-GUTI. When the Deregistration Request includes a 5G-GUTI together with the "user identifier or attribute/qualification credential," the 5G-GUTI may be unused in subsequent processing.

Upon receiving the Deregistration Request, the AMF 30 acquires, from its own storage device or the like, information necessary for subsequent processing (such as an SM Context ID) corresponding to the "user identifier or attribute/qualification credential."

In S202, the AMF 30 transmits, to the SMF 210, an Nsmf_PDUSession_ReleaseSMContext Request, which is a message for releasing a PDU session on a target access belonging to the UE 20. At this time, the AMF 30 transmits, in the message, the "user identifier or attribute/qualification credential" instead of the SUPI.

Upon receiving the Nsmf_PDUSession_ReleaseSMContext Request, the SMF 210 acquires, from its own storage device or the like, information necessary for subsequent processing (for example, an N4 Session ID) corresponding to the received "user identifier or attribute/qualification credential."

In S203, the SMF 210 transmits an N4 Session Release Request to the UPF 220, and in S204, the SMF 210 receives an N4 Session Release Response from the UPF 220.

In S205, the SMF 210 transmits an Nsmf_PDUSession_ReleaseSMContext Response to the AMF 30. In S206, an SM Policy Association Termination procedure is executed between the PCF 200 and the SMF 210.

When the connection to be released is the last PDU session being processed for the UE 20 associated with the DNN and the S-NSSAI, in S207, the SMF 210 unsubscribes from Session Management Subscription data changes notification by the UDM 40 using a Nudm_SDM_Unsubscribe service operation.

In S208, the SMF 210 invokes a Nudm_UECM_Deregistration service operation. As a result, the UDM 40 deletes the SMF ID, the SMF address, and the association stored between the associated DNN and the PDU session ID.

In S207 and S208 described above, the SMF 210 transmits, to the UDM 40, each service operation message including, instead of the SUPI, the user identifier or the attribute/qualification credential. The UDM 40 acquires information necessary for subsequent processing corresponding to the received "user identifier or attribute/qualification credential." Thereafter, processing in the UDM 40 is the same as in the existing technology.

In S209, the AMF 30 executes an AMF-initiated AM Policy Association Termination procedure.

In S210, the AMF 30 transmits Deregistration Accept (acknowledgment message for release of the connection) to the UE 20. In S211, the signaling connection is released.

### (Second Embodiment: Pattern 2)

Next, Pattern 2 will be described. As described above, Pattern 2 is a pattern of Network-initiated Deregistration (a procedure in a case where release of the NW connection is triggered from the NW).

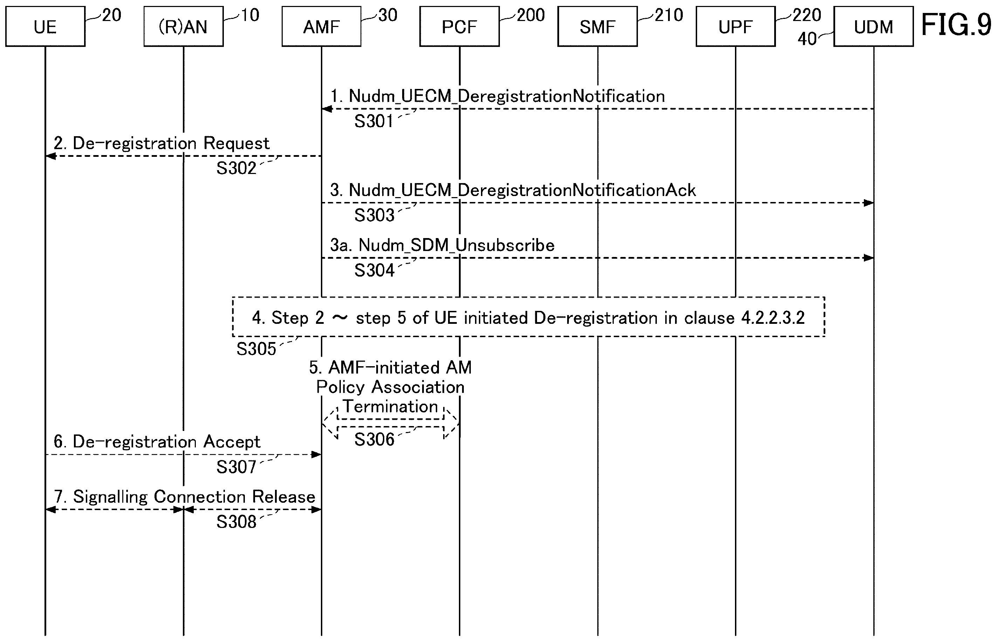

The processing sequence of Pattern 2 will be described with reference to FIG. 9. As described above, as a precondition for the processing, in each network node such as the AMF 30, the SMF 210, and the UDM 40, at least one of the user identifier and the attribute/qualification credential is managed in association with existing management information of the network node.

The sequence itself of Pattern 2 is the same as the existing sequence relating to Network-initiated Deregistration, and FIG. 9 is basically the same as Figure 4.2.2.3.3-1: Network-initiated Deregistration described in the existing specification (3GPP TS 23.502).

The AMF 30 may determine to initiate this procedure explicitly (based on O&M intervention or the like) or implicitly (based on expiration of an implicit deregistration timer or the like). Further, the UDM 40 may trigger this procedure for a purpose determined by an operator to request deletion of an RM context of a subscriber and a PDU session of the UE.

In S301, when the UDM 40 requests immediate deletion of an RM context and a PDU session of a subscriber, the UDM 40 transmits, to the AMF 30, a Nudm_UECM_DeregistrationNotification message including "Access Type, Removal Reason," and "user identifier or attribute/qualification credential." This message is an example of a message requesting release of subscriber data.

Upon receiving the above message, the AMF 30 identifies a UE 20 to be processed based on the received user identifier or attribute/qualification credential, and determines to start processing for release of the NW connection with respect to the UE 20.

In S302, the AMF 30 transmits a Deregistration Request to the UE 20 identified as a processing target.

When the deregistration procedure is triggered by the UDM 40 in S301, the AMF 30 transmits Nudm_UECM_DeregistrationNotificationAck to the UDM 40 (S303).

When "the access type is 3GPP Access or non-3GPP Access and the AMF 30 does not hold UE context for the other access type," or when the access type is both, in S304, the AMF 30 unsubscribes from the UDM 40 using a Nudm_SDM_Unsubscribe service operation. The AMF 30 includes, in this message, the user identifier or the attribute/qualification credential instead of the SUPI. Note that, in S304, the message transmitted from the AMF 30 to the UDM 40 is an example of a message requesting release of subscriber data of the UE 20.

Upon receiving the above message, the UDM 40 acquires information necessary for subsequent processing corresponding to the received "user identifier or attribute/qualification credential." Thereafter, the processing contents are the same as in the existing technology.

In S305, when the UE 20 has a PDU session established via an access that is the target of deregistration shown in S302, Steps 2 to 5 of the UE-initiated Deregistration procedure are executed. Operation and extension contents in this case follow the above-described "Pattern 1" of release of the connection.

In S306, AMF-initiated AM Policy Association Termination is performed. In S307, the UE 20 transmits Deregistration Accept (acknowledgment message for release of the connection) to the AMF 30. In S308, the signaling connection is released.

### (Effects of the Second Embodiment)

According to the technique of the second embodiment, the terminal 20 that has connected to the NW based on authentication using an attribute/qualification credential can release the connection.

### (Other Examples Common to the First Embodiment and the Second Embodiment)

Below, other examples common to the first embodiment and the second embodiment will be described.

The NW connection function 21 may include, for example, a digital identity wallet that manages a user identifier, an attribute/qualification credential, a public/private key pair associated with the identifier, and the like.

A storage location in the NW connection function 21 for storing the user identifier, the attribute/qualification credential, the public/private key pair associated with the identifier, and the like may be a normal storage area in the UE 20, an HSM (Hardware Security Module) in the UE 20, or a storage or the like outside the UE 20 that is accessible from the UE 20.

The issuer of the attribute/qualification credential may be not only a third party, but also the 3GPP NW operator itself.

When both a SIM and an attribute/qualification credential are available in the UE 20, or when a plurality of attribute/qualification credentials are available for NW connection, it may be possible to select, based on a user operation/setting, which information is to be included in a message and presented to the NW side.

In an existing 3GPP NW, a SUPI or a SUCI is used for identifying a UE in order to provide a unified service to a certain UE, and many messages exchanged between NFs and inputs of APIs of services provided by NFs are required to include the SUPI or the SUCI. In contrast, in the present embodiment, even in a situation in which the UE 20 cannot provide a SUPI or SUCI to the 3GPP NW, it is possible to identify/manage the UE 20 based on a user identifier (such as a DID) and an identifier capable of uniquely identifying an attribute/qualification credential (such as an ID of the VC itself).

Further, all mechanisms in databases of respective nodes such as the AMF 30 and the UDM/UDR (40) that manage information using a SUPI or SUCI as a key can be adapted to management using, as a key, a user identifier (such as a DID) or an identifier capable of uniquely identifying an attribute/qualification credential.

### (Apparatus Configuration)

Next, examples of functional configurations of the terminal 20 (UE 20) and of "the authentication function 60, the AMF 30, the UDM 40, the VDR 70, the AUSF 80, the PCF 200, the SMF 210, the UPF 220, and the like" that execute the processing and operations described above will be described. Hereinafter, the network nodes such as the authentication function 60, the AMF 30, the UDM 40, the VDR 70, the AUSF 80, the PCF 200, the SMF 210, and the UPF 220 are collectively referred to as a "network node 100."

### <Network Node 100>

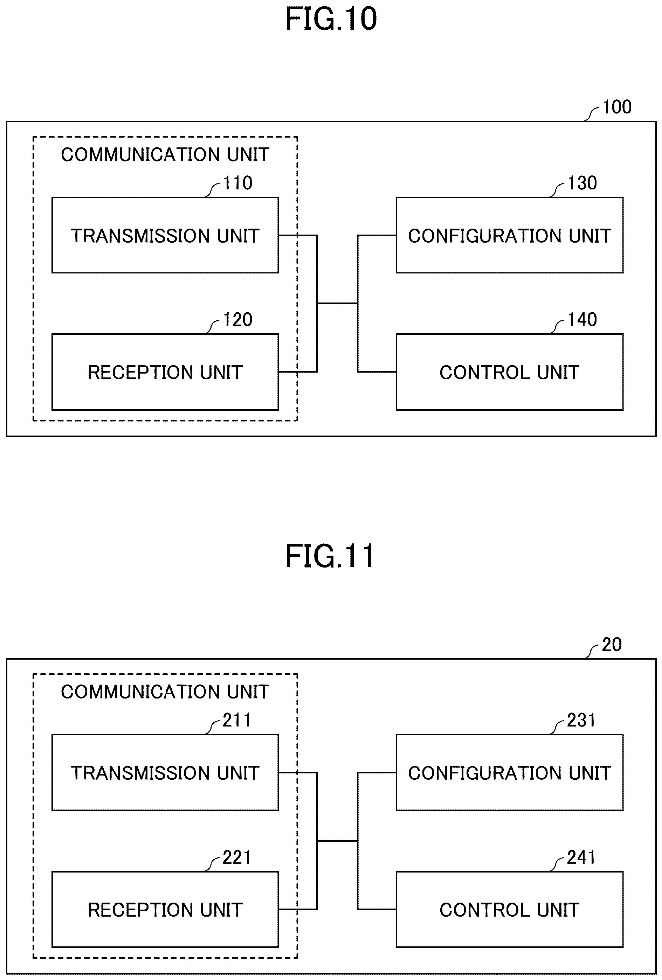

FIG. 10 is a diagram illustrating an example of a functional configuration of the network node 100.

As illustrated in FIG. 10, the network node 100 includes a transmission unit 110, a reception unit 120, a configuration unit 130, and a control unit 140. The functional configuration illustrated in FIG. 10 is merely an example. As long as the operation according to the embodiment of the present invention can be executed, the functional classification and the names of the functional units may be arbitrary.

The transmission unit 110 includes a function of generating a signal to be transmitted to the terminal 20 or another network node and transmitting the signal by wire or wirelessly. The reception unit 120 includes a function of receiving various signals transmitted from the terminal 20 or another network node and acquiring, from the received signals, information of, for example, a higher layer. A communication unit including the transmission unit 110 and the reception unit 120 may be configured.

The configuration unit 130 stores, in a storage device, configuration information set in advance and various types of configuration information to be transmitted to the terminal 20, and reads them out from the storage device as necessary. The control unit 140 controls the network node 100. A functional unit relating to signal transmission in the control unit 140 may be included in the transmission unit 110, and a functional unit relating to signal reception in the control unit 140 may be included in the reception unit 120. Note that the transmission unit 110 and the reception unit 120 may also be referred to as a transmitter and a receiver, respectively.

### <Terminal 20>

FIG. 11 is a diagram illustrating an example of a functional configuration of the terminal 20. As illustrated in FIG. 11, the terminal 20 includes a transmission unit 211, a reception unit 221, a configuration unit 231, and a control unit 241. The functional configuration illustrated in FIG. 11 is merely an example. As long as the operation according to the embodiment of the present invention can be executed, the functional classification and the names of the functional units may be arbitrary.

The transmission unit 211 generates a transmission signal from transmission data and transmits the transmission signal wirelessly. The reception unit 221 wirelessly receives various signals and acquires a higher-layer signal from a received physical-layer signal. The reception unit 221 also has a function of receiving an NR-PSS, an NR-SSS, an NR-PBCH, a DL/UL control signal, a reference signal, or the like transmitted from the network node. A communication unit including the transmission unit 211 and the reception unit 221 may be configured.

The configuration unit 231 stores, in a storage device, various types of configuration information received from the network node by the reception unit 221, and reads them out from the storage device as necessary. The configuration unit 231 also stores configuration information set in advance.

The control unit 241 controls the terminal 20. A functional unit relating to signal transmission in the control unit 241 may be included in the transmission unit 211, and a functional unit relating to signal reception in the control unit 241 may be included in the reception unit 221. Note that the transmission unit 211 and the reception unit 221 may also be referred to as a transmitter and a receiver, respectively.

### (Hardware Configuration)

The block diagrams (FIGS. 10 and 11) used in the description of the embodiment described above illustrate the block of functional units. Such functional blocks (configuration parts) are attained by at least one arbitrary combination of hardware and software. In addition, an attainment method of each of the functional blocks is not particularly limited. That is, each of the function blocks may be attained by using one apparatus that is physically or logically coupled, by directly or indirectly (for example, in a wired manner, over the radio, or the like) connecting two or more apparatuses that are physically or logically separated and by using such a plurality of apparatuses. The function block may be attained by combining one apparatus described above or a plurality of apparatuses described above with software.

The function includes determining, judging, calculating, computing, processing, deriving, investigating, looking up, ascertaining, receiving, transmitting, output, accessing, resolving, selecting, choosing, establishing, comparing, assuming, expecting, presuming, broadcasting, notifying, communicating, forwarding, configuring, reconfiguring, allocating (mapping), assigning, and the like, but is not limited thereto. For example, a function block (a configuration part) that functions to transmit is referred to as the transmission unit or the transmitter. As described above, the attainment method thereof is not particularly limited.

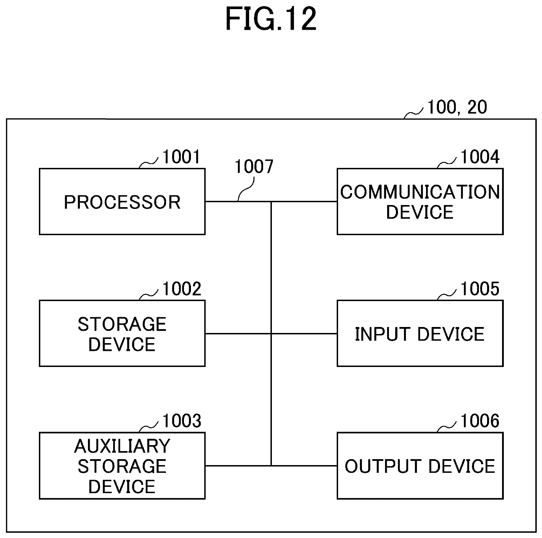

For example, the network node 100, and the terminal 20 and the like in one embodiment of this disclosure may function as a computer for performing the processing of a radio communication method of this disclosure. FIG. 12 is a diagram illustrating an example of a hardware configuration of the network node 100 and the terminal 20 and the like according to one embodiment of this disclosure. The network node 100 and the terminal 20 described above may be physically configured as a computer apparatus including a processor 1001, a storage device 1002, an auxiliary storage device 1003, a communication device 1004, an input device 1005, an output device 1006, a bus 1007, and the like.

Note that, in the following description, the word "apparatus" can be replaced with a circuit, a device, a unit, or the like. The hardware configuration of the network node 100 and the terminal 20 and the like may be configured to include one or a plurality of apparatuses illustrated in the drawings, or may be configured not to include a part of the apparatuses.

Each function of the network node 100 and the terminal 20 is attained by reading predetermined software (a program) on hardware such as the processor 1001 and the storage device 1002 such that the processor 1001 performs an operation, and by controlling the communication of the communication device 1004 or by controlling at least one of reading and writing of data in the storage device 1002 and the auxiliary storage device 1003.

The processor 1001, for example, controls the entire computer by operating an operating system. The processor 1001 may be configured by a central processing unit (CPU) including an interface with respect to the peripheral equipment, a control apparatus, an operation apparatus, a register, and the like. For example, the control unit 140, the control unit 241, or the like, described above, may be attained by the processor 1001.

In addition, the processor 1001 reads out a program (a program code), a software module, data, and the like to the storage device 1002 from at least one of the auxiliary storage device 1003 and the communication device 1004, and thus, executes various processing. A program for allowing a computer to execute at least a part of the operation described in the embodiment described above is used as the program. The control unit 140 of the network node 100 shown in Fig.10 may be attained by a control program that is stored in the storage device 1002 and is operated by the processor 1001. Also, for example, the control unit 241 of the terminal 20 shown in Fig.11 may be attained by a control program that is stored in the storage device 1002 and is operated by the processor 1001. It has been described that the various processing described above are executed by one processor 1001, but the various processing may be simultaneously or sequentially executed by two or more processors 1001. The processor 1001 may be mounted on one or more chips. Note that, the program may be transmitted from a network through an electric communication line.

The storage device 1002 is a computer readable recording medium, and for example, may be configured of at least one of a read only memory (ROM), an erasable programmable ROM (EPROM), an electrically erasable programmable ROM (EEPROM), a random access memory (RAM), and the like. The storage device 1002 may be referred to as a register, a cache, a main memory (a main storage unit), and the like. The storage device 1002 is capable of retaining a program (a program code), a software module, and the like that can be executed in order to implement a communication method according to one embodiment of this disclosure.

The auxiliary storage device 1003 is a computer readable recording medium, and for example, may be configured of at least one of an optical disk such as a compact disc ROM (CD-ROM), a hard disk drive, a flexible disk, a magnetooptical disk (for example, a compact disc, a digital versatile disk, and a Blu-ray (Registered Trademark) disc), a smart card, a flash memory (for example, a card, a stick, a key drive), a floppy (Registered Trademark) disk, a magnetic strip, and the like. The storage medium described above, for example, may be a database including at least one of the storage device 1002 and the auxiliary storage device 1003, a server, and a suitable medium.

The communication device 1004 is hardware (a transmitting and receiving device) for performing communication with respect to the computer through at least one of a wired network and a radio network, and for example, is also referred to as a network device, a network controller, a network card, a communication module, and the like. The communication device 1004, for example, may be configured by including a high frequency switch, a duplexer, a filter, a frequency synthesizer, and the like, in order to attain at least one of frequency division duplex (FDD) and time division duplex (TDD). For example, a transmitting and receiving antenna, an amplifier, a transmitting and reception unit, a transmission path interface, and the like may be attained by the communication device 1004. In the transmitting and reception unit, the transmission unit and the reception unit are mounted by being physically or logically separated.

The input device 1005 is an input device for receiving input from the outside (for example, a keyboard, a mouse, a microphone, a switch, a button, a sensor, and the like). The output device 1006 is an output device for implementing output with respect to the outside (for example, a display, a speaker, an LED lamp, and the like). Note that, the input device 1005 and the output device 1006 may be integrally configured (for example, a touch panel).

In addition, each of the apparatuses such as the processor 1001 and the storage device 1002 may be connected by the bus 1007 for performing communication with respect to information. The bus 1007 may be configured by using a single bus, or may be configured by using buses different for each of the apparatuses.

In addition, the network node 100 and the terminal 20 may be configured by including hardware such as a microprocessor, a digital signal processor (DSP), an application specific integrated circuit (ASIC), a programmable logic device (PLD), and a field programmable gate array (FPGA), and a part or all of the respective function blocks may be attained by the hardware. For example, the processor 1001 may be mounted by using at least one of the hardware.

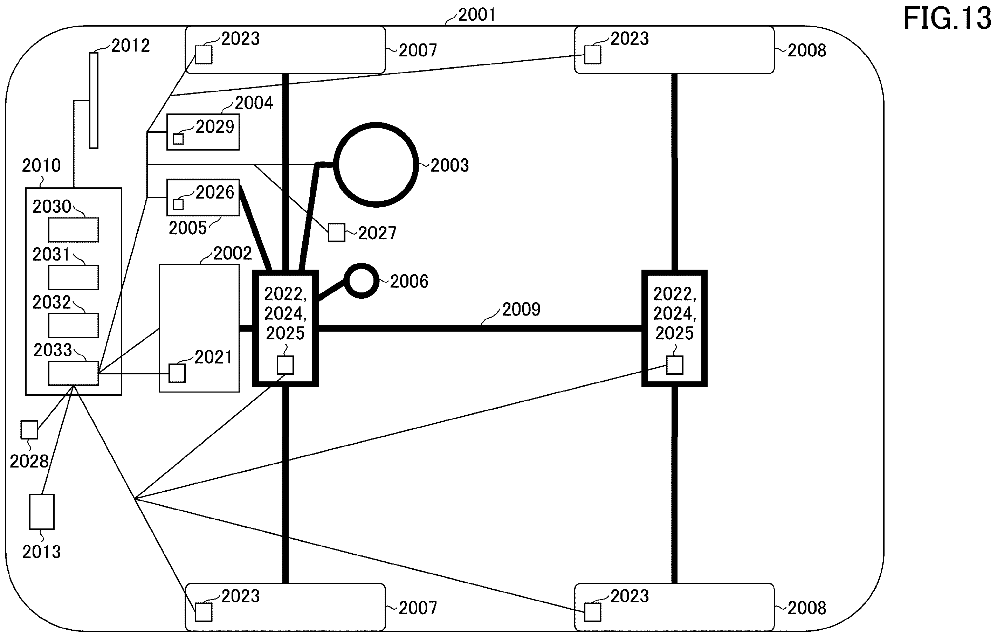

FIG. 13 shows a configuration example of a vehicle 2001. As shown in FIG. 13, the vehicle 2001 includes a drive unit 2002, a steering unit 2003, an accelerator pedal 2004, a brake pedal 2005, a shift lever 2006, front wheels 2007, rear wheels 2008, an axle 2009, an electronic control unit 2010, various sensors 2021-2029, an information service unit 2012, and a communication module 2013. The aspect/embodiment described in the present disclosure may be applied to a communication apparatus mounted on the vehicle 2001, and may be applied to, for example, the communication module 2013. For example, the network nodes 100, or the terminal 20, may be included in the communication module 2013.

The drive unit 2002 may include, for example, an engine, a motor, and a hybrid of an engine and a motor. The steering unit 2003 includes at least a steering wheel and is configured to steer at least one of the front wheel and the rear wheel, based on the operation of the steering wheel operated by the user.

The electronic control unit 2010 includes a microprocessor 2031, a memory (ROM, RAM) 2032, and a communication port (IO port) 2033. The electronic control unit 2010 receives signals from the various sensors 2021-2029 provided in the vehicle 2001. The electronic control unit 2010 may be referred to as an ECU (Electronic control unit).

The signals from the various sensors 2021 to 2029 include a current signal from a current sensor 2021 which senses the current of the motor, a front or rear wheel rotation signal acquired by a revolution sensor 2022, a front or rear wheel pneumatic signal acquired by a pneumatic sensor 2023, a vehicle speed signal acquired by a vehicle speed sensor 2024, an acceleration signal acquired by an acceleration sensor 2025, a stepped-on accelerator pedal signal acquired by an accelerator pedal sensor 2029, a stepped-on brake pedal signal acquired by a brake pedal sensor 2026, an operation signal of a shift lever acquired by a shift lever sensor 2027, and a detection signal, acquired by the object detection sensor 2028, for detecting an obstacle, a vehicle, a pedestrian, and the like.

The information service unit 2012 includes various devices for providing various kinds of information such as driving information, traffic information, and entertainment information, including a car navigation system, an audio system, a speaker, a television, and a radio, and one or more ECUs controlling these devices. The information service unit 2012 provides various types of multimedia information and multimedia services to the occupants of the vehicle 2001 by using information obtained from the external device through the communication module 2013 or the like. The information service unit 2012 may include an input device (for example, a keyboard, a mouse, a microphone, a switch, a button, a sensor, a touch panel, etc.) that receives input from external sources and may also include an output device (for example, a display, a speaker, an LED lamp, a touch panel, etc.) that provides output to external destinations.

A driving support system unit 2030 includes: various devices for providing functions of preventing accidents and reducing driver's operating loads such as a millimeter wave radar, a LiDAR (Light Detection and Ranging), a camera, a positioning locator (e.g., GNSS, etc.), map information (e.g., high definition (HD) map, autonomous vehicle (AV) map, etc.), a gyro system (e.g., IMU (Inertial Measurement Unit), INS (Inertial Navigation System), etc.), an AI (Artificial Intelligence) chip, an AI processor; and one or more ECUs controlling these devices. In addition, the driving support system unit 2030 transmits and receives various types of information via the communication module 2013 to realize a driving support function or an autonomous driving function.

The communication module 2013 may communicate with the microprocessor 2031 and components of the vehicle 2001 via a communication port. For example, the communication module 2013 transmits and receives data via the communication port 2033, to and from the drive unit 2002, the steering unit 2003, the accelerator pedal 2004, the brake pedal 2005, the shift lever 2006, the front wheels 2007, the rear wheels 2008, the axle 2009, the microprocessor 2031 and the memory (ROM, RAM) 2032 in the electronic control unit 2010, and sensors 2021-2029 provided in the vehicle 2001.

The communication module 2013 is a communication device that can be controlled by the microprocessor 2031 of the electronic control unit 2010 and that is capable of communicating with external devices. For example, various kinds of information are transmitted to and received from external devices through radio communication. The communication module 2013 may be internal to or external to the electronic control unit 2010. The external devices may include, for example, a base station, a terminal, a network node, or the like.

The communication module 2013 may transmit at least one of, signals from the various sensors 2021 to 2028 described above input to the electronic control unit 2010, information obtained based on the signals, and information based on input from the outside (user) obtained via the information service unit 2012 to an external device via radio communication. The electronic control unit 2010, the various sensors 2021 to 2028, the information service unit 2012, and the like may be referred to as an input unit that receives an input.

The communication module 2013 receives various types of information (traffic information, signal information, inter-vehicle information, etc.) transmitted from the external devices and displays the received information on the information service unit 2012 provided in the vehicle 2001. The information service unit 2012 may be referred to as an output unit that outputs information (for example, outputs information to a device such as a display or a speaker based on the PDSCH (or data/information decoded from the PDSCH) received by the communication module 2013). In addition, the communication module 2013 stores the various types of information received from the external devices in the memory 2032 available to the microprocessor 2031. Based on the information stored in the memory 2032, the microprocessor 2031 may control the drive unit 2002, the steering unit 2003, the accelerator pedal 2004, the brake pedal 2005, the shift lever 2006, the front wheels 2007, the rear wheels 2008, the axle 2009, the sensors 2021-2029, etc., mounted in the vehicle 2001.

Further, when the communication module 2013 includes the network node 100 (or the terminal 20), the communication module 2013 can execute the operation of the network node 100 (or the terminal 20) described above.

The present specification discloses at least the configurations according to Supplementary Note below.

### <Supplementary Notes>

### (Clause 1)

A network node including:
a reception unit configured to receive, from a terminal that has connected to a network based on authentication using a credential containing personal data, a first message requesting release of the connection; and
a transmission unit configured to transmit, to a session management node, a second message requesting release of the connection, a second message including the credential or an identifier of the terminal, wherein the credential or the identifier is acquired based on the first message.

### (Clause 2)

The network node according to Clause 1,
wherein the transmission unit acquires, based on information included in the first message, the credential or the identifier of the terminal that is managed in association with the information in the network node.

### (Clause 3)

The network node according to Clause 1,
wherein the first message includes the credential or the identifier of the terminal, and the transmission unit acquires the credential or the identifier of the terminal from the first message.

### (Clause 4)

A network node including:
a reception unit configured to receive, from a data management node, a message requesting release of subscriber data for a terminal that has connected to a network based on authentication using a credential containing personal data, the message including the credential or an identifier of the terminal; and
a control unit configured to determine that the connection of the terminal identified by the credential or the identifier of the terminal is to be released.

### (Clause 5)

A communication method executed by a network node, the communication method including:
receiving, from a terminal that has connected to a network based on authentication using a credential containing personal data, a first message requesting release of the connection; and
transmitting, to a session management node, a second message requesting release of the connection, the second message including the credential or an identifier of the terminal, wherein the credential or the identifier is acquired based on the first message.

### (Clause 6)

A communication method executed by a network node, the communication method including:
receiving, from a data management node, a message requesting release of subscriber data for a terminal that has connected to a network based on authentication using a credential containing personal data, the message including the credential or an identifier of the terminal; and
determining that the connection of the terminal identified by the credential or the identifier of the terminal is to be released.

According to any one of Clauses 1 to 6, there is provided a technique that enables a terminal that has connected to a NW based on authentication using an attribute/qualification credential to release the connection. According to Clause 2, even when a message from the terminal does not include a credential or an identifier, the credential or the identifier can be acquired. According to Clause 3, the credential or the identifier can be acquired from a message from the terminal.

### (Supplement to Embodiment)

As described above, the embodiment of the invention has been described, but the disclosed invention is not limited to the embodiment, and a person skilled in the art will understand various modification examples, correction examples, alternative examples, substitution examples, and the like. Specific numerical examples have been described in order to facilitate the understanding of the invention, but the numerical values are merely an example, and any appropriate values may be used, unless otherwise specified. The classification of the items in the above description is not essential to the invention, and the listings described in two or more items may be used by being combined, as necessary, or the listing described in one item may be applied to the listing described in another item (insofar as there is no contradiction). A boundary between the functional parts or the processing parts in the function block diagram does not necessarily correspond to a boundary between physical components. The operations of a plurality of functional parts may be physically performed by one component, or the operation of one functional part may be physically performed by a plurality of components. In a processing procedure described in the embodiment, a processing order may be changed, insofar as there is no contradiction. For the convenience of describing the processing, the network node 100 and the terminal 20 have been described by using a functional block diagram, but such an apparatus may be attained by hardware, software, or a combination thereof. Each of software that is operated by a processor of the network node 100 and software that is operated by a processor of the terminal 20 according to the embodiment of the invention may be retained in a random access memory (RAM), a flash memory, a read only memory (ROM), an EPROM, an EEPROM, a register, a hard disk (HDD), a removable disk, a CD-ROM, a database, a server, and other suitable recording media.

In addition, the notification of the information is not limited to the aspect/embodiment described in this disclosure, and may be performed by using other methods. For example, the notification of the information may be implemented by physical layer signaling (for example, downlink control information (DCI) and uplink control information (UCI)), higher layer signaling (for example, radio resource control (RRC) signaling, medium access control (MAC) signaling, broadcast information (a master information block (MIB)), a system information block (SIB)), other signals, or a combination thereof. In addition, the RRC signaling may be referred to as an RRC message, and for example, may be an RRC connection setup message, an RRC connection reconfiguration message, and the like.

Each aspect/embodiment described in this disclosure may be applied to a system using long term evolution (LTE), LTE-advanced (LTE-A), SUPER 3G, IMT-advanced, a 4th generation mobile communication system (4G), a 5th generation mobile communication system (5G), 6th generation mobile communication system (6G),xth generation mobile communication system (xG) (xG, where x is, for example, an integer or a decimal), FRA (Future Radio Access),NR (New Radio), New Radio Access (NX), Future generation radio access (FX), W-CDMA (Registered Trademark), GSM (Registered Trademark), CDMA2000, an ultra mobile broadband (UMB), IEEE 802.11 (Wi-Fi (Registered Trademark)), IEEE 802.16 (WiMAX (Registered Trademark)), IEEE 802.20, an ultra-wideband (UWB), Bluetooth (Registered Trademark), and other suitable systems and a next-generation system that is expanded, modified, generated, or specified on the basis thereof. In addition, a combination of a plurality of systems (for example, a combination of at least 5G and one of LTE and LTE-A, and the like) may be applied.

In the processing procedure, the sequence, the flowchart, and the like of each aspect/embodiment described herein, the order may be changed, insofar as there is no contradiction. For example, in the method described in this disclosure, the elements of various steps are presented by using an exemplary order, but are not limited to the presented specific order.

Specific operations that are described in the present specification as being performed by the base station 10 ((R)AN 10) may in some cases be performed by an upper node thereof. In a network including one or more network nodes having the base station 10, it is clear that various operations performed for communication with the terminal 20 may be performed by at least one of the base station 10 and another network node other than the base station 10 (for example, an MME or an S-GW, but not limited thereto). Although the above has exemplified a case where the number of other network nodes other than the base station 10 is one, the other network node may be a combination of a plurality of other network nodes (for example, an MME and an S-GW).

The information, the signal, or the like described in this disclosure can be output to a lower layer (or the higher layer) from the higher layer (or the lower layer). The information, the signal, or the like may be input and output through a plurality of network nodes.

The information or the like that is input and output may be retained in a specific location (for example, a memory), or may be managed by using a management table. The information or the like that is input and output can be subjected to overwriting, updating, or editing. The information or the like that is output may be deleted. The information or the like that is input may be transmitted to the other apparatuses.

Judgment in this disclosure may be performed by a value represented by 1 bit (0 or 1), may be performed by a truth-value (Boolean: true or false), or may be performed by a numerical comparison (for example, a comparison with a predetermined value).

Regardless of whether the software is referred to as software, firmware, middleware, a microcode, and a hardware description language, or is referred to as other names, the software should be broadly interpreted to indicate a command, a command set, a code, a code segment, a program code, a program, a sub-program, a software module, an application, a software application, a software package, a routine, a sub-routine, an object, an executable file, an execution thread, a procedure, a function, and the like.

In addition, software, a command, information, and the like may be transmitted and received through a transmission medium. For example, in a case where the software is transmitted from a website, a server, or other remote sources by using at least one of a wire technology (a coaxial cable, an optical fiber cable, a twisted pair, a digital subscriber line (DSL), and the like) and a radio technology (an infrared ray, a microwave, and the like), and at least one of the wire technology and the radio technology is included in the definition of the transmission medium.

The information, the signal, and the like described in this disclosure may be represented by using any of various different technologies. For example, the data, the command, the information, the signal, the bit, the symbol, the chip, and the like that can be referred to through the entire description above may be represented by a voltage, a current, an electromagnetic wave, a magnetic field or magnetic particles, an optical field or a photon, or an arbitrary combination thereof.

Note that, the terms described in this disclosure and the terms necessary for understanding this disclosure may be replaced with terms having the same or similar meaning. For example, at least one of the channel and the symbol may be a signal (signaling). In addition, the signal may be a message. In addition, a component carrier (CC) may be referred to as a carrier frequency, a cell, a frequency carrier, and the like.

The terms "system" and "network" used in this disclosure are interchangeably used.

In addition, the information, the parameter, and the like described in this disclosure may be represented by using an absolute value, may be represented by using a relative value from a predetermined value, or may be represented by using another corresponding piece of information. For example, a radio resource may be indicated by an index.

The names used in the parameters described above are not a limited name in any respect. Further, expressions or the like using such parameters may be different from those explicitly disclosed in this disclosure. Various channels (for example, PUCCH, PDCCH, and the like) and information elements can be identified by any suitable name, and thus, various names that are allocated to such various channels and information elements are not a limited name in any respect.

In this disclosure, the terms "base station (BS)", "radio base station", "base station", "fixed station", "NodeB", "eNodeB (eNB)", "gNodeB (gNB)", "access point", "transmission point", "reception point", "transmission and reception point", "cell", "sector", "cell group", "carrier", "component carrier", and the like can be interchangeably used. The base station may be referred to by a term such as a macro-cell, a small cell, a femtocell, and a picocell.

The base station is capable of accommodating one or a plurality of (for example, three) cells. In a case where the base station accommodates a plurality of cells, the entire coverage area of the base station can be classified into a plurality of small areas, and each of the small areas is capable of providing communication service by a base station sub-system (for example, an indoor type small base station (a remote radio head (RRH)). The term "cell" or "sector" indicates a part of the coverage area or the entire coverage area of at least one of the base station and the base station sub-system that perform the communication service in the coverage.

In the present disclosure, the transmission of information from the base station to the terminal may be read as the base station instructing the terminal to perform control and operation based on the information.

In the present disclosure, the terms "Mobile Station (MS)", "user terminal", "User Equipment (UE)", "terminal", and the like may be used interchangeably.

The mobile station may be referred to as a subscriber station, a mobile unit, a subscriber unit, a wireless unit, a remote unit, a mobile device, a wireless device, a wireless communication device, a remote device, a mobile subscriber station, an access terminal, a mobile terminal, a wireless terminal, a remote terminal, a handset, a user agent, a mobile client, a client, or other suitable terms, by a person skilled in the art.

At least one of the base station and the mobile station (terminal 20) may be referred to as a transmitting apparatus, a receiving apparatus, a communication apparatus, and the like. Note that, at least one of the base station and the mobile station may be a device that is mounted on a mobile object, the mobile object itself, or the like. The mobile object is a movable object, and the moving speed is arbitrary. The moving object may be stopped. Examples of the moving object include, but are not limited to, vehicles, transportation vehicles, automobiles, motorcycles, bicycles, connected cars, excavators, bulldozers, wheel loaders, dump trucks, forklifts, trains, buses, rear cars, rickshaws, ships and other watercraft, airplanes, rockets, artificial satellites, drones, multicopters, quadcopters, balloons, and objects mounted thereon. Moreover, the mobile object may be an autonomous mobile object that operates based on operation commands. The mobile object may be a vehicle (for example, a car, an airplane, and the like), may be a mobile object that is moved in an unmanned state (for example, a drone, an autonomous driving car, and the like), or may be a (manned or unmanned) robot. Note that, at least one of the base station and the mobile station also includes an apparatus that is not necessarily moved at the time of a communication operation. For example, at least one of the base station and the mobile station may be an internet of things (IoT) device such as a sensor.

Further, in the present disclosure, the base station may be read as the user terminal. For example, the various aspects/embodiments of the present disclosure may be applied to a configuration in which communication between a base station and a user terminal is replaced with communication between a plurality of terminals 20 (which may also be referred to as D2D (Device-to-Device), V2X (Vehicle-to-Everything), or the like). In this case, the terminal 20 may have the functions of the base station 10 described above. Further, terms such as "uplink" and "downlink" may be read as terms corresponding to terminal-to-terminal communication (for example, "side"). For example, an uplink channel, a downlink channel, and the like may be read as a side channel.

Similarly, in the present disclosure, the user terminal may be read as the base station. In this case, the base station may have the functions of the user terminal described above.

The terms "determining" used in this disclosure may involve diverse operations. "Determining", for example, may include deeming judging, calculating, computing, processing, deriving, investigating, looking up (search, inquiry) (for example, looking up in a table, a database, or another data structure), and ascertaining, as "determining". In addition, "determining" may include deeming receiving (for example, receiving information), transmitting (for example, transmitting information), input, output, and accessing (for example, accessing data in a memory), as "determining". In addition, "determining" may include deeming resolving, selecting, choosing, establishing, comparing, and the like as "determining". That is, "determining" may include deeming an operation as "determining". In addition, "determining" may be replaced with "assuming", "expecting", "considering", and the like.

The terms "connected" and "coupled", or any modification thereof indicate any direct or indirect connection or couple in two or more elements, and are capable of including a case where there are one or more intermediate elements between two elements that are "connected" or "coupled" to each other. The couple or connection between the elements may be physical or logical, or may be a combination thereof. For example, the "connection" may be replaced with "access". In the case of being used in this disclosure, it is possible to consider that two elements are "connected" or "coupled" to each other by using at least one of one or more electric wires, cables, and print electric connection, and as some nonlimiting and non-inclusive examples, by using electromagnetic energy having a wavelength of a radio frequency domain, a microwave domain, and an optical (visible and invisible) domain, and the like.

The reference signal can also be abbreviated as RS, and may be referred to as pilot based on a standard to be applied.

The description "based on" that is used in this disclosure does not indicate only "based on only", unless otherwise specified. In other words, the description "based on" indicates both "based on only" and "based on at least".

Any reference to elements using the designations "first", "second", and the like, used in this disclosure, does not generally limit the amount or the order of such elements. Such designations can be used in this disclosure as a convenient method for discriminating two or more elements. Therefore, a reference to a first element and a second element does not indicate that only two elements can be adopted or that the first element necessarily precedes the second element in any manner.

"Means" in the configuration of each of the apparatuses described above may be replaced with "unit", "circuit", "device", and the like.

In this disclosure, in a case where "include", "including", and the modification thereof are used, such terms are intended to be inclusive, as with the term "comprising". Further, the term "or" that is used in this disclosure is not intended to be an exclusive-OR.

In this disclosure, for example, in a case where articles such as "a", "an", and "the" are added by translation, this disclosure may include a case where nouns following the articles are plural.

In this disclosure, the term "A and B are different" may indicate "A and B are different from each other". Note that, the term may indicate "A and B are respectively different from C". The terms "separated", "coupled", and the like may be interpreted as with "being different".

Each aspect/embodiment described in this disclosure may be independently used, may be used by being combined, or may be used by being switched in accordance with execution. In addition, the notification of predetermined information (for example, the notification of "being X") is not limited to being performed explicitly, and may be performed implicitly (for example, the notification of the predetermined information is not performed).

As described above, this disclosure has been described in detail, but it is obvious for a person skilled in the art that this disclosure is not limited to the embodiment described in this disclosure. This disclosure can be implemented as corrected and modified without departing from the spirit and scope of this disclosure defined by the description of the claims. Therefore, the description in this disclosure is for illustrative purposes and does not have any limiting meaning with respect to this disclosure.

### Description of Symbols

10 Base station ((R)AN)
20 Terminal (UE)
21 NW connection function
30 AMF
40 UDM
41 NW information DB
42 Credential information DB
43 Policy DB
60 Authentication function
70 VDR
71 User information DB
72 Issuer information DB
73 Definition information DB
74 Management information DB
80 AUSF
100 Network node
110 Transmission unit
120 Reception unit
130 Configuration unit
140 Control unit
200 PCF
210 SMF
220 UPF
211 Transmission unit
221 Reception unit
231 Configuration unit
241 Control unit
1001 Processor
1002 Storage device
1003 Auxiliary storage device
1004 Communication device
1005 Input device
1006 Output device

## Claims

1. A network node comprising:
a reception unit configured to receive, from a terminal that has connected to a network based on authentication using a credential containing personal data, a first message requesting release of the connection; and
a transmission unit configured to transmit, to a session management node, a second message requesting release of the connection, the second message including the credential or an identifier of the terminal, wherein the credential or the identifier is acquired based on the first message.

2. The network node as claimed in claim 1,
wherein the transmission unit acquires, based on information included in the first message, the credential or the identifier of the terminal that is managed in association with the information in the network node.

3. The network node as claimed in claim 1,
wherein the first message includes the credential or the identifier of the terminal, and the transmission unit acquires the credential or the identifier of the terminal from the first message.

4. A network node comprising:
a reception unit configured to receive, from a data management node, a message requesting release of subscriber data for a terminal that has connected to a network based on authentication using a credential containing personal data, the message including the credential or an identifier of the terminal; and
a control unit configured to determine that the connection of the terminal identified by the credential or the identifier of the terminal is to be released.

5. A communication method executed by a network node, the communication method comprising:
receiving, from a terminal that has connected to a network based on authentication using a credential containing personal data, a first message requesting release of the connection; and
transmitting, to a session management node, a second message requesting release of the connection, the second message including the credential or an identifier of the terminal, wherein the credential or the identifier is acquired based on the first message.

6. A communication method executed by a network node, the communication method comprising:
receiving, from a data management node, a message requesting release of subscriber data for a terminal that has connected to a network based on authentication using a credential containing personal data, the message including the credential or an identifier of the terminal; and
determining that the connection of the terminal identified by the credential or the identifier of the terminal is to be released.
